# EUROPEAN PATENT SPECIFICATION

(11) **EP 2 521 755 B1**
(45) Date of publication and mention of the grant of the patent: **26.10.2016**
(21) Application number: 10842466.4
(22) Date of filing: 09.12.2010
(51) Int. Cl.: C09D 183/02, C09D 5/08, C09D 7/12, C09D 7/14, C23C 26/00, C23C 22/68, C23C 18/12

(54) **CORROSION PROTECTION COATINGS AND METHODS OF MAKING THE SAME**
ROSTSCHUTZBESCHICHTUNGEN UND VERFAHREN ZU DEREN HERSTELLUNG
REVÊTEMENTS DE PROTECTION CONTRE LA CORROSION ET LEURS PROCÉDÉS DE FABRICATION

(30) Priority: 07.01.2010 US 683940
(43) Date of publication of application: 14.11.2012
(73) Proprietor: The University Of Hawaii, Honolulu, HI 96822 (US)
(72) Inventor: HIHARA, Lloyd, H., Mililani Hawaii 96826 (US); TIWARI, Atul, Honolulu Hawaii 96826 (US)
(74) Representative: Hanratty, Catherine
(86) International application number: PCT/US2010/059730
(87) International publication number: WO 2011/084346

(56) References cited:
- WO-A2-01/53425
- US-A- 5 508 062
- US-A- 5 508 062
- US-A- 6 010 757
- US-A- 6 166 163
- US-A- 6 166 163
- US-A1- 2004 229 040
- US-A1- 2005 118 218
- US-A1- 2005 118 218
- US-A1- 2008 090 069

## Description

### BACKGROUND

Deterioration of material from corrosion remains a challenging problem across many industries. It is expected that the annual losses due to corrosion of materials in the United States alone is about US$350 billion, or 3-4% of the gross domestic product. Accordingly, a vast industry has emerged around the development of corrosion protection coatings and the like.

However, developing successful coatings that provide corrosion protection of metals and alloys is a challenging task, partly due to restrictions imposed by the Environmental Protection Agency (EPA) on the use of environmentally hostile chemicals. For example, aluminum and its alloys have historically been protected by thin chromate conversion coatings or chromated primers, but the EPA has placed restrictions on the use of these coatings and primers due to the health risks associated therewith.

Unfortunately, alternatives to chromate conversion coatings also face their own set of problems. Organic-inorganic, ceramic-polymer hybrid (i.e., ceramer) materials possess excellent environmental stability, but their long-term use in aggressive climates remains questionable. Free volume associated with these hybrid coatings often provides percolation pathways for ions and electrolytes to reach the substrate material and initiate corrosion. Many organic coatings are susceptible to in-diffusion of moisture due to their micro-porous structure, and also tend to degrade in the presence of solar radiation. Inorganic coatings may be relatively impervious and resistant to solar degradation, but tend to be brittle and susceptible to cracking on flexible substrates. Silicone-based coatings can include relatively high hydrocarbon content to ensure good adhesion to the substrate, but tend to fail due to moisture-induced delamination. Even the material on which a corrosion protection coating is to be used can lead poor performance. For example, the adherence of corrosion protections coatings to aluminum materials can be hindered by the rapid formation of an inert oxide layer on the top of bare aluminum surfaces.

US 5 508 062 A discloses a method of forming an insoluble corrosion resistant protective coating on a substrate comprising mixing a composition comprising a titanium catalyst and a silane, wherein the coating is allowed to hydrolyze with atmospheric moisture and condense in place to form the insoluble coating.

### SUMMARY

Disclosed are embodiments of a corrosion protection composition and methods of making the same utilizing a mixture of silanes. The corrosion protection composition can be used to coat various types of metals and protect against corrosion.

The present invention discloses a silicone network-based corrosion protection coating composition including a first mixture of three silanes. The first silane is selected from methyltriacetoxysilane, and dimethyldiacetoxysilane. The second silane is methyltrimethoxysilane. The third silane is selected from tetramethoxysilane or tetraethoxysilane. , wherein the first mixture comprises from 3.0 % to 10.0 % first silane, from 2.0 % to 8.0% second silane, and from 0.5 % to 3.0 % third silane. The method for manufacturing said corrosion protection composition includes the preparation and combination of various mixtures to produce the corrosion protection composition. The method includes a step of preparing a preliminary mixture that includes three silanes. The first silane is methyltriacetoxysilane, or dimethyldiacetoxysilane. The second silane can be methyltrimethoxysilane. The third silane can be tetramethoxysilane or tetraethoxysilane. The method may also include a step of preparing an intermediate mixture. The intermediate mixture may include the preliminary mixture and a first supplemental mixture. The first supplemental mixture can include an alkali metal salt. The method may include a further step of preparing a colloidal suspension. The colloidal suspension can include the intermediate mixture and a second supplemental mixture. The second supplemental mixture can include a titaniumalkoxide. The method may also include a step of preparing a corrosion protection composition. The corrosion protection composition can include the colloidal suspension and a third supplemental mixture. The third supplemental mixture can include a tin catalyst or a titanium catalyst.

The foregoing and other features, utilities, and advantages of the subject matter described herein will be apparent from the following more particular description of certain embodiments as illustrated in the accompanying drawings.

### BRIEF DESCRIPTION OF THE DRAWINGS

The preferred and other embodiments are disclosed in association with the accompanying drawings in which:
Figure 1 illustrates a possible mode of interaction between silanes used in composition and methods described herein;
Figure 2 is a flow chart detailing a method for manufacturing a corrosion protection composition as disclosed herein;
Figure 3 is a series of VIEEW images taken of coated and uncoated aluminum alloy coupons after immersion in 3.15 wt% NaCl solution for 30 days;
Figure 4 is a series of VIEEW images taken of coated and uncoated aluminum alloy coupons after immersion in 10% Harrison's solution for 30 days; and
Figure 5 is a series of VIEEW images taken of coated and uncoated aluminum alloy after exposure in a Singleton CCT-10 Cyclic Corrosion Test Chamber for 8 days.

### DETAILED DESCRIPTION

The corrosion protection coating composition described herein includes a first mixture of three different silanes. The three silanes may interact to ultimately form a network that is the foundation of the corrosion protection composition. In order to create the desired network, specific silanes may be selected for the first mixture.

The first silane included in the first mixture may be methyltriacetoxysilane, or dimethyldiacetoxysilane. the first silane is selected from this group due to the presence of methyl groups and acetate groups in the compounds. As part of the synthesis of the network of the corrosion protection composition, the methyl groups may induce facile hydrolysis of the acetate groups containing silane.

The second silane included in the first mixture is methyltrimethoxysilane. Similar to the first silane, methyltrimethoxysilane is selected as the second silane due to the presence of the methyl groups and the ability of the methyl groups to promote the hydrolysis of the methoxy linkages in the second silane.

The third silane included in the first mixture is either tetramethoxysilane or tetraethoxysilane. The third silane is selected as a silane capable of crosslinking the silanols formed after hydrolysis in the first and second silanes and ultimately forming the network of the corrosion protection composition.

Each of the silanes used in the first mixture may be from about 90% to about 99% pure. The amount of each silane in the first mixture is adjusted so that it results in the formation of the network described above. Specifically, the first mixture comprises from 3.0% to 10.0% of the first silane, from 2.0% to 8.0% of the second silane, and from 0.5% to 3.0% of the third silane. Deviations from these amounts may result in undesirable characteristics of the corrosion protection composition. For example, excess amounts of the first silane in the corrosion protection composition may result in corrosion of the substrate when coated with the corrosion protection composition. Excess amounts of the second silane may result in a coating having poor barrier properties. Excess amounts of the third silane may result in cracking in the coating formed by the corrosion protection composition.

The first mixture may further include one or more solvents to facilitate the interaction between the three silanes. Any suitable solvent may be used. In some embodiments, the solvent may be isopropanol, methanol, ethanol, butanol, or any combination thereof. The amount of solvent in the first mixture may range from about 79.0% to about 94.5% of the first mixture.

In some embodiments, the corrosion protection composition may include further mixtures. In some embodiments, a second mixture is included with the first mixture as part of the corrosion protection composition. The second mixture may generally include an alkali metal salt. The alkali metal salt may serve as a pH regulator. Any suitable alkali metal salt may be used. In some embodiments, the alkali metal salt may be either sodium bicarbonate or potassium bicarbonate. The second mixture may also include ultra pure water. The alkali metal salt may amount to from about 2.0% to about 15.0% of the second mixture and the ultrapure water may amount to from about 85.0% to about 98.0% of the second mixture.

A third mixture that may also be included as part of the corrosion protection composition may generally include a titaniumalkoxide. The titaniumalkoxide may be included in the composition to impart UV light protection to the composition. The titaniumalkoxide may be incorporated into the network of the composition. Any suitable titaniumalkoxide may be used. In some embodiments, the titaniumalkoxide may be titanium (IV) ethoxide or titanium (IV) methoxide. The third mixture may also include a solvent. Any suitable solvent may be used. In some embodiments, the solvent may be isopropanol, methanol, ethanol, butanol, or any combination thereof. The titaniumalkoxide may amount to from about 0.1% to about 2.0% of the third mixture and the solvent may amount to from about 98.0% to about 99.9% of the third mixture.

A fourth mixture that may also be included as part of the corrosion protection composition may generally include a tin catalyst or a titanium catalyst. Any suitable tin catalyst or titanium catalyst may be used. In some embodiments, the tin catalyst may be dibutyl tin dilaurate, di-n-butyldiacetoxytin, dibutyltin diisooctylmaleate, di-n-butylbis(2,4-pentanedionate)tin, di-n-butylbutoxychlorotin, dioctyltindilaurate, dimethyltin dineodecanoate, and bis(neodecanoate)tin. In some embodiments, the titanium catalyst may be titanium 2-ethylhexoxide, titanium di-n-butoxide (bis-2,4- pentanedionate), titanium diisopropoxide(bis-2,4-pen-tanedionate), titanium diisopropoxide bis(ethyl-acetoacetate), titanium trimethylsiloxide. The tin or titanium catalyst may be used to increase the hardening process of the corrosion protection composition.

In some embodiments, the fourth mixture may further include a second solvent and a co-solvent. Any suitable solvents may be used in the fourth mixture. In some embodiments, the second solvent may be isopropanol, methanol, ethanol, butanol or any combination thereof, and the co-solvent may be diethylether. The co-solvent may be used in the fourth mixture for its surface cleaning ability. The tin or titanium catalyst may amount to from about 0.05% to about 0.20% of the fourth mixture, the second solvent may amount to from about 30.0% to about 50.0% of the fourth mixture, and the co-solvent may amount to from about 50.0% to about 70.0% of the fourth mixture. In some embodiments, the second solvent may amount to from 40.02% to about 40.03% of the fourth mixture, and co-solvent from about 59.88% to about 59.97% of the fourth mixture.

When all four mixtures are used in the corrosion protection composition, the first mixture may amount to from about 50.0% to about 80.0% of the corrosion protection composition, the second mixture may amount to about 0% to about 10.0% of the corrosion protection composition, the third mixture may amount to from about 5.0% to about 25.0% of the corrosion protection composition, and the fourth mixture may amount to from about 5.0% to about 25.0% of the corrosion protection composition. In some embodiments, the first mixture may amount to from about 63.0% to about 70.0% of the corrosion protection composition, the second mixture may amount to about 3.0% to about 4.0% of the corrosion protection composition, the third mixture may amount to from about 13.0% to about 17.0% of the corrosion protection composition, and the fourth mixture may amount to from about 13.0% to about 17.0% of the corrosion protection composition.

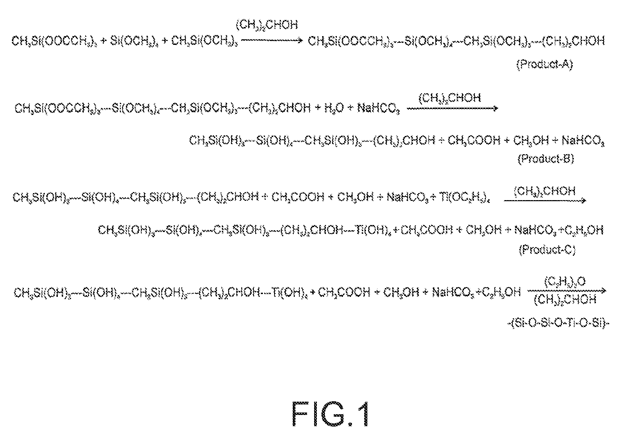

With reference to Figure 1, a possible reaction mechanism between the four mixtures is shown.

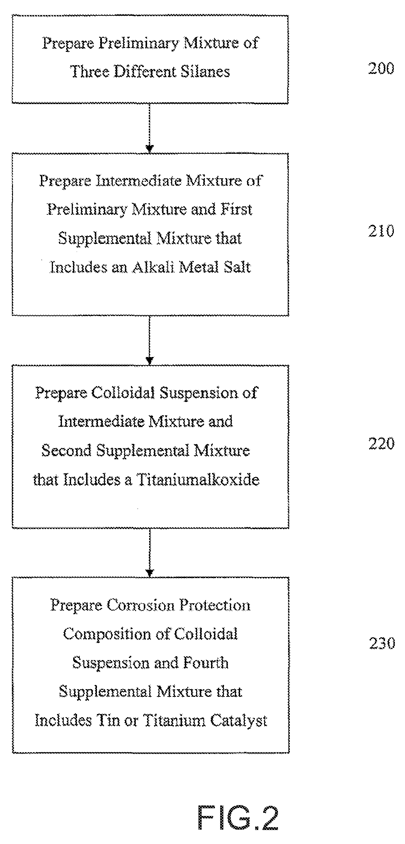

A method for manufacturing the corrosion protection composition described herein may generally include the preparation of various mixtures and the combining of those mixtures to eventually arrive at the corrosion protection composition. With reference to Figure 2, the method may generally include a step 200 of preparing a preliminary mixture of three different silanes, a step 210 of preparing an intermediate mixture of the preliminary mixture and a first supplemental mixture that includes an alkali metal salt, a step 220 of preparing a colloidal suspension of the intermediate mixture and a second supplemental mixture that includes a titaniumalkoxide, and a step 230 of preparing a corrosion protection composition of the colloidal suspension and a fourth supplemental mixture that includes a tin or titanium catalyst.

Beginning with step 200, the preliminary mixture may be prepared by combining three different silanes together. The preliminary mixture may be similar or identical to the first mixture described in greater detail above. As with the first mixture described in greater detail above, the preliminary mixture may further include a solvent, such isopropanol.

Any manner of preparing the preliminary mixture that includes combining the three silanes together may be used. In some embodiments, the preparation of the preliminary mixture may include combining the three silanes in a vessel and sonicating the materials to promote interaction between the silanes. The sonication can be carried out by any apparatus capable of sonicating mixtures. The sonication may also be carried out for any suitable period of time. In some embodiments, the sonication is carried out from about 2.0 minutes to about 30.0 minutes, and preferably for about 15 minutes.

With respect to step 210, the intermediate mixture may be prepared by combining the preliminary mixture with a first supplemental mixture. The first supplemental mixture may be similar or identical to the second mixture described in greater detail above, including the presence of an alkali metal salt in the mixture. Also as described above with respect to the second mixture, the first supplemental mixture may include ultra pure water. Any manner of preparing the first supplemental mixture that includes combining the alkali metal salt and the ultra pure water may be used. In some embodiments, the preparation of the first supplemental mixture may include combining the alkali metal salt and the ultra pure water in a vessel and sonicating the materials. The sonication can be carried out by any apparatus capable of sonicating mixtures. The sonication may also be carried out for any suitable period of time. In some embodiments, the sonication is carried out for from about 2.0 minutes to about 30.0 minutes, and preferably for about 15 minutes.

Any manner of preparing the intermediate mixture that includes combining the preliminary mixture and the first supplemental mixture may be used. In some embodiments, the preparation of the intermediate mixture may include combining the preliminary mixture and the first supplemental mixture in a vessel and sonicating the materials. The sonication can be carried out by any apparatus capable of sonicating mixtures. The sonication may also be carried out for any suitable period of time. In some embodiments, the sonication is carried out for from about 2.0 minutes to about 60.0 minutes, and preferably for about 30 minutes.

With respect to step 220, the colloidal suspension may be prepared by combining the intermediate mixture with a second supplemental mixture. The second supplemental mixture may be similar or identical to the third mixture described in greater detail above, including the presence of a titaniumalkoxide in the mixture. Also as described above with respect to the third mixture, the second supplemental mixture may include solvent. Any manner of preparing the second supplemental mixture that includes combining the titaniumalkoxide and the solvent may be used. In some embodiments, the preparation of the second supplemental mixture may include combining the titanium alkoxide and the solvent in a vessel and sonicating the materials. The sonication can be carried out by any apparatus capable of sonicating mixtures. The sonication may also be carried out for any suitable period of time. In some embodiments, the sonication is carried out for from about 2.0 minutes to about 30.0 minutes, and preferably for about 15 minutes.

Any manner of preparing the colloidal suspension that includes combining the intermediate mixture and the second supplemental mixture may be used. In some embodiments, the preparation of the colloidal suspension may include combining the intermediate mixture and the second supplemental mixture in a vessel and sonicating the materials. The sonication can be carried out by any apparatus capable of sonicating mixtures. The sonication may also be carried out for any suitable period of time. In some embodiments, the sonication is carried out for from about 2.0 minutes to about 60.0 minutes, and preferably for about 30 minutes.

With respect to step 230, the corrosion protection composition may be prepared by combining the colloidal suspension with a third supplemental mixture. The third supplemental mixture may be similar or identical to the fourth mixture described in greater detail above, including the presence of a tin or titanium catalyst in the mixture. Also as described above with respect to the fourth mixture, the third supplemental mixture may include a solvent and a co-solvent. Any manner of preparing the third supplemental mixture that includes combining the tin or titanium catalyst, the solvent, and the co-solvent may be used. In some embodiments, the preparation of the third supplemental mixture may include combining the tin or titanium catalyst, the solvent, and the co-solvent in a vessel and sonicating the materials. The sonication can be carried out by any apparatus capable of sonicating mixtures. The sonication may also be carried out for any suitable period of time. In some embodiments, the sonication is carried out for from about 2.0 minutes to about 30.0 minutes, and preferably for about 15 minutes.

Any manner of preparing the corrosion protection composition that includes combining the colloidal suspension and the third supplemental mixture may be used. In some embodiments, the preparation of the corrosion protection composition may include combining the colloidal suspension and the third supplemental mixture in a vessel and sonicating the materials. The sonication can be carried out by any apparatus capable of sonicating mixtures. The sonication may also be carried out for any suitable period of time. In some embodiments, the sonication is carried out for from about 2.0 minutes to about 60.0 minutes, and preferably for about 30 minutes.

The corrosion protection composition manufactured by the method described herein may generally be a colorless, transparent liquid. In some embodiments, pigment may be added to the composition to give the composition color. The viscosity of the corrosion protection composition is relatively low, and may generally be similar to the viscosity of water. The low viscosity of the corrosion protection composition may allow the composition to creep into crevices in the substrate to be coated.

Substrates may be coated with the corrosion protection composition described herein by any suitable method. In some embodiments, the composition may be sprayed or brushed onto the substrate, or the substrate may be dip coated with the composition. After the composition has been applied to substrate, the composition may be allowed to harden and form a coating on the substrate. The coating may generally be dry to the touch within 30 minutes of coating and may be handled within 3 hours of coating. Left under ambient conditions, the coating may be almost completely cured within around 12 hours of coating and may be at full strength after about 6 days. The total curing process may be accelerated by curing at elevated temperatures such as between 40-60°C. As noted above, the hardening process may also be accelerated by utilizing a tin or titanium catalyst. The resultant coating may generally be a transparent, hard, thin film on the surface of the substrate. In some embodiments, the coating may have a thickness of from about 2µm to about 5µm.

The coating formed by applying the corrosion protection composition to the substrate may form covalent bonds with the substrate to ensure good adherence and protect against delamination. For example, in the case of coating aluminum substrates, the composition may etch the oxide layer of the aluminum substrate surface to reveal hydroxyl functionalities. Reactive functionalities of the composition may then form stable chemical bonds with the functionalities of the substrate.

Any metal substrate may be coated with the corrosion protection composition, including alloys of various metals. As noted above, the corrosion protection composition has been shown to be especially useful for coating aluminum and aluminum alloy substrates.

Coatings on substrates produced by the corrosion protection composition may be coated with specially developed top coats to provide further beneficial characteristics to the coated substrate.

### Examples

For each of the Examples below, 2 inch by 2 inch metal coupons were dip-coated with the corrosion protection composition described herein. The coated coupons were air-dried overnight and then heated at 60°C for 5 hours with the exception of the coupons used for immersion testing, which were cured for 15 days at 60°C. The coated coupons were then stored in a dry box (McDry) at 2% relative humidity until required for experimentation. Similar results to those described below were obtained on coupons that were air dried in ambient conditions for 24 hours, then heated to from 40°C to 60°C for 2 hours and finally left in ambient conditions for 48 hours.

### Example 1 - Outdoor Exposure and Corrosion Studies

A total of 12 aluminum alloy coupons were used for this study - four 2" x 2" 6061A1 coupons, four 2" x 2" 2024A1 coupons, and four 2" x 2" 7075 A1 coupons. One coupon in each set was left bare, two coupons in each set were coated with the corrosion protection composition, and one coupon in each set was coated and scribed. All 12 coupons were mounted on a test rack and exposed to the high-altitude Muana Loa test site on the Big Island, HI, which was established by the Hawaii Corrosion Laboratory, University of Hawaii. This test site was chosen for the high level of solar radiation exposure. The coupons were retrieved after 4 months of exposure.

Each coupon was scanned using a VIEEW instrument before and after the 4 month exposure period. Visual comparison of the VIEEW scans before and after exposure revealed no visible damages to the coupons coated in the corrosion protection composition.

### Example 2 - Immersion Test

A 3.15 wt% NaCl solution was prepared using reagent-grade chemicals and ultrapure 18MΩ·cm resistivity water. Harrison's solution was prepared by adding 3.5 g/l ammonium sulfate and 0.5 g/l sodium chloride to ultrapure water. The Harrison's solution was diluted to 10% strength.

### NaCl Immersion

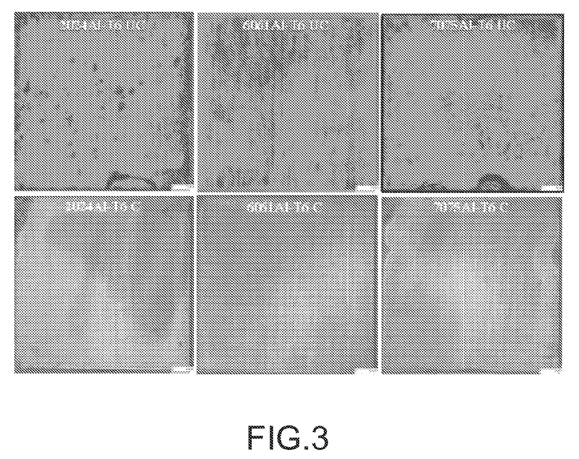

A set of three coupons of three different aluminum alloys (2024Al, 6061Al, and 7075Al) were coated with the corrosion protection composition as described above and immersed in the 3.15 wt% NaCl solution prepared as described above for 30 days. Uncoated coupons of the same aluminum alloys were also immersed simultaneously for comparison. Figure 3 shows the VIEEW analysis of coated (C) and uncoated (UC) coupons after 30 days of immersions. Uncoated coupons suffered severe surface damage due to corrosion, while the coated coupons were not affected. Slight corrosion at the edges of the coated coupons may be due to edge defects in the coating during the dip-coating process.

### Harrison's Solution Immersion

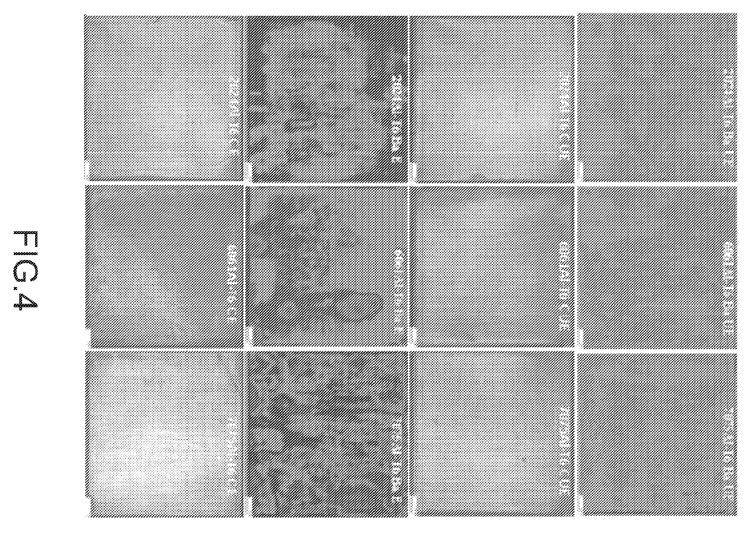

A set of nine coated coupons of aluminum alloys (2024Al, 6061Al, and 7075Al) and three uncoated coupons were exposed to Q-Sun for 60 hours. Six of the nine coated coupons and the three uncoated coupons were subsequently immersed in Harrison's solution prepared as described above. An additional six coated coupons that were not exposed to UV light were also immersed in Harrison's solution prepared as described above. The coupons were retrieved after 30 days of immersion. All coupons were then washed with ultrapure water and air dried, at which point VIEEW images were taken of each of the coupons. Figure 4 shows the VIEEW images taken for the various samples. Each sample is labeled with the aluminum alloy type and whether it was coated (C) or uncoated (UC) and exposed to UV radiation (E) or unexposed to UV radiation (UE).

Neither the UV exposed nor the non-UV exposed coated coupons showed signs of corrosion, suggesting that the corrosion protection composition acted as an impervious coating under immersion conditions even after UV exposure. Uncoated coupons suffered severe corrosion.

### Example 3 - Accelerated Weather Corrosion Test

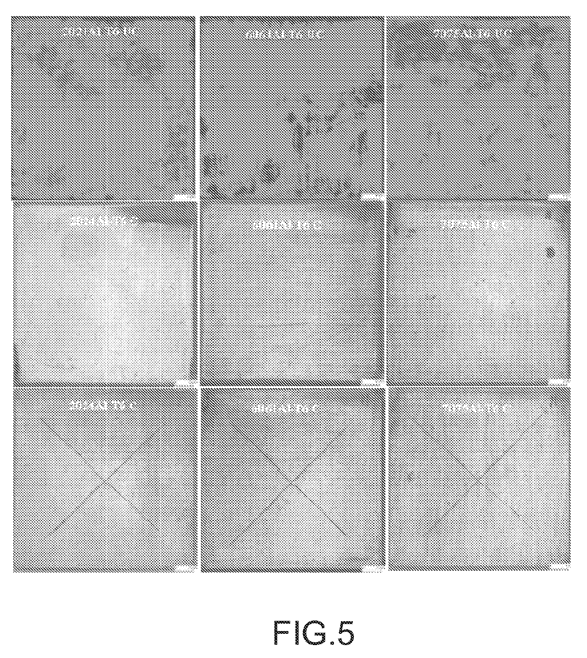

Three types of coated aluminum alloy coupons (2024Al, 6061Al, and 7075Al) were mounted on a plastic rack and exposed to accelerated weather environment in a Singleton CCT-10 Cyclic Corrosion Test Chamber for 8 days. One coated coupon from each set was scribed to study the effect of corrosion at a deliberate coating defect. For comparative purposes, uncoated coupons of the same aluminum alloys were exposed simultaneously. The test was conducted as per GM9540P standards. VIEEW images of the coupons after exposure are shown in Figure 5.

The uncoated coupons suffered severe surface damage due to corrosion, while coated coupons were not affected. Slight corrosion at the edges of the coated coupons may be due to edge defects. Scribed coated coupons corroded in the scratch area, but there was no sign of coating lift-off adjacent to these scribed areas.

It should be recognized that the illustrated embodiments are only preferred examples of the invention.

## Claims

1. A silicone network-based corrosion protection coating composition comprising:
a first mixture comprising:
a first silane selected from the group consisting of methyltriacetoxysilane and dimethyldiacetoxysilane;
a second silane of methyltrimethoxysilane; and
a third silane selected from the group consisting of tetramethoxysilane and tetraethoxysilane,
wherein the first mixture comprises from 3.0 % to 10.0 % first silane, from 2.0 % to 8.0% second silane, and from 0.5 % to 3.0 % third silane.

2. The silicone network-based corrosion protection coating composition as recited in claim 1, further comprising:
a second mixture comprising an alkali metal salt, wherein optionally the alkali metal salt is sodium bicarbonate or potassium bicarbonate, preferably the second mixture comprises from 2.0 % to 15.0 % alkali metal salt.

3. The silicone network-based corrosion protection coating composition as recited in claim 2, further comprising:
a third mixture comprising a titaniumalkoxide, wherein optionally the titaniumalkoxide is titanium (IV) ethoxide or titanium (IV) methoxide, preferably the third mixture comprises from 0.1 % to 2.0 % titaniumalkoxide.

4. The silicone network-based corrosion protection coating composition as recited in claim 3, further comprising:
a fourth mixture comprising a tin catalyst or a titanium catalyst,
wherein optionally the tin catalyst is selected from the group consisting of dibutyl tin dilaurate, di-n-butyldiacetoxytin, dibutyltin diisooctylmaleate, di-n-butylbis(2,4-pentanedionate)tin, di-n-butylbutoxychlorotin, dioctyltindilaurate, dimethyltin dineodecanoate, and bis(neodecanoate)tin, and the titanium catalyst is selected from the group consisting of titanium 2-ethylhexoxide, titanium di-n-butoxide (bis-2,4-pentanedionate), titanium diisopropoxide(bis-2,4-pen-tanedionate), titanium diisopropoxide bis(ethyl-acetoacetate), titanium trimethylsiloxide,
wherein optionally the fourth mixture comprises from 0.05 % to 0.20 % tin catalyst or titanium catalyst,
wherein optionally the fourth mixture further comprises a second solvent and a co-solvent, and optionally the second solvent is selected from the group consisting of isopropanol, methanol, ethanol, and butanol and the co-solvent is diethlyether.

5. The silicone network-based corrosion protection coating composition as recited in claim 4, wherein the first mixture further comprises a first solvent, wherein optionally the first solvent is selected from the group consisting of isopropanol, methanol, ethanol, and butanol.

6. The silicone network-based corrosion protection coating composition as recited in claim 4, wherein each of the first silane, the second silane, and the third silane are from about 90% to about 99% pure.

7. A method for manufacturing a corrosion protection composition coating comprising:
preparing a preliminary mixture comprising:
3.0% to 10% of a first silane selected from the group consisting of methyltriacetoxysilane and dimethyldiacetoxysilane;
2.0% to 8.0% of a second silane of methyltrimethoxysilane; and
0.5% to 3.0% of a third silane selected from the group consisting of tetramethoxysilane and tetraethoxysilane.
preparing an intermediate mixture comprising the preliminary mixture and a first supplemental mixture, the first supplemental mixture comprising an alkali metal salt and ultra pure water;
preparing a colloidal suspension comprising the intermediate mixture and a second supplemental mixture, the second supplemental mixture comprising a titaniumalkoxide;
preparing a corrosion protection composition comprising the colloidal suspension and a third supplemental mixture, the third supplemental mixture comprising a tin catalyst or a titanium catalyst.

8. The method as recited in claim 7, wherein the preliminary mixture further comprises a first solvent.

9. The method as recited in claim 7, wherein preparing the preliminary mixture comprises sonicating the first silane, the second silane and the third silane.

10. The method as recited in claim 7 the first supplemental mixture is prepared by sonicating the alkali metal salt and the ultra pure water.

11. The method as recited in claim 7, wherein the second supplemental mixture further comprises a second solvent, wherein optionally the second supplemental mixture is prepared by sonicating the titaniumalkoxide and the second solvent.

12. The method as recited in claim 7, wherein the third supplemental mixture further comprises a third solvent and a co-solvent, wherein optionally the third supplemental mixture is prepared by sonicating the third solvent, the co-solvent, and the tin catalyst or the titanium catalyst.

13. The method as recited in claim 7, wherein preparing the intermediate mixture comprises sonicating the preliminary mixture and the first supplemental mixture.

14. The method as recited in claim 7, wherein preparing the colloidal suspension comprises sonicating the intermediate mixture and the second supplemental mixture.

15. The method as recited in claim 7, wherein preparing the corrosion protection composition comprises sonicating the colloidal suspension and the third supplemental mixture.

## Patentansprüche

1. Eine silikonnetzwerkbasierte Korrosionsschutzschichtzusammensetzung, die umfasst:
ein erstes Gemisch, das umfasst:
ein erstes Silan, das ausgewählt ist aus der Gruppe bestehend aus Methyltriacetoxysilan und Dimethyldiacetoxysilan;
ein zweites Silan von Methyltrimethoxysilan; und
ein drittes Silan, ausgewählt aus der Gruppe bestehend aus Tetramethoxysilan und Tetraethoxysilan,
wobei das erste Gemisch von 3,0% bis 10,0% erstes Silan, von 2,0% bis 8,0% zweites Silan, und von 0,5% bis 3,0% drittes Silan umfasst.

2. Die silikonnetzwerkbasierte Korrosionsschutzschichtzusammensetzung wie in Anspruch 1 aufgeführt, die weiterhin umfasst:
ein zweites Gemisch, das ein Alkalimetallsalz umfasst, wobei optional das Alkalimetallsalz ein Natriumbicarbonat oder Kaliumbicarbonat ist, und vorzugsweise das zweite Gemisch von 2,0% bis 15,0% Alkalimetallsalz umfasst.

3. Die silikonnetzwerkbasierte Korrosionsschutzschichtzusammensetzung, wie in Anspruch 2 aufgeführt, die weiterhin umfasst:
ein drittes Gemisch, das ein Titanalkoxid umfasst, wobei optional das Titanalkoxid Titan(IV)ethoxid oder Titan(IV)methoxid ist, und bevorzugt das dritte Gemisch von 0,1% bis 2,0% Titanalkoxid umfasst.

4. Die silikonnetzwerkbasierte Korrosionsschutzschichtzusammensetzung, wie in Anspruch 3 aufgeführt, die weiterhin umfasst:
ein viertes Gemisch, das einen Zinnkatalysator oder einen Titankatalysator umfasst,
wobei optional der Zinnkatalysator ausgewählt ist aus der Gruppe bestehend aus Dibutylzinndilaurat, Di-n-butyldiacetoxyzinn, Dibutylzinndiisooctylmaleat, Di-n-butylbis(2,4-pentandionat)zinn, Di-n-butylbutoxychlorotin, Dioctylzinndilaurat, Dimethylzinndineodecanoat, und Bis(neodecanoat)zinn, und der Titankatalysator ausgewählt ist aus der Gruppe bestehend aus Titan-2-ethylhexoxid, Titan-di-n-butoxid(bis-2,4-pentandionat), Titan-diisopropoxid(bis-2,4-pentandionat), Titan-diisopropoxid-bis(ethyl-acetoacetat), Titan-trimethylsiloxid,
wobei optional das vierte Gemisch von 0,05% bis 0,20% Zinnkatalysator oder Titankatalysator umfasst,
wobei optional das vierte Gemisch weiterhin ein zweites Lösungsmittel und ein Co-Lösungsmittel umfasst, und optional das zweite Lösungsmittel ausgewählt ist aus der Gruppe bestehend aus Isopropanol, Methanol, Ethanol, und Butanol und das Co-Lösungsmittel Diethylether ist.

5. Die silikonnetzwerkbasierte Korrosionsschutzschichtzusammensetzung wie in Anspruch 4 aufgeführt, wobei das erste Gemisch weiterhin ein erstes Lösungsmittel umfasst, wobei optional das erste Lösungsmittel ausgewählt ist aus der Gruppe bestehend aus Isopropanol, Methanol, Ethanol, und Butanol.

6. Die silikonnetzwerkbasierte Korrosionsschutzschichtzusammensetzung wie in Anspruch 4 aufgeführt, wobei jedes des ersten Silans, des zweiten Silans, und des dritten Silans von ungefähr 90% bis ungefähr 99% rein ist.

7. Ein Verfahren zur Herstellung einer Schicht einer Korrosionsschutzzusammensetzung, das umfasst:
Herstellen eines Vorgemisches, das umfasst:
3,0% bis 10% eines ersten Silans, das ausgewählt ist aus der Gruppe bestehend aus Methyltriacetoxysilan und Dimethyldiacetoxysilan;
2,0% bis 8,0% eines zweiten Silans von Methyltrimethoxysilan; und
0,5% bis 3,0% eines dritten Silans, das ausgewählt ist aus der Gruppe bestehend aus Tetramethoxysilan und Tetraethoxysilan;
Herstellen eines Zwischengemisches, das das Vorgemisch und ein erstes ergänzendes Gemisch umfasst, wobei das erste ergänzende Gemisch ein Alkalimetallsalz und ultrareines Wasser umfasst;
Herstellen einer kolloidalen Suspension, die das Zwischengemisch und ein zweites ergänzendes Gemisch umfasst, wobei das zweite ergänzende Gemisch ein Titanalkoxid umfasst;
Herstellen einer Korrosionsschutzzusammensetzung, die die kolloidale Suspension und ein drittes ergänzendes Gemisch umfasst, wobei das dritte ergänzende Gemisch einen Zinnkatalysator oder einen Titankatalysator umfasst.

8. Das Verfahren, wie in Anspruch 7 aufgeführt, wobei das Vorgemisch weiterhin ein erstes Lösungsmittel umfasst.

9. Das Verfahren, wie in Anspruch 7 aufgeführt, wobei das Herstellen des Vorgemisches ein Behandeln des ersten Silans, des zweiten Silans und des dritten Silans in einem Ultraschallbad umfasst.

10. Das Verfahren, wie in Anspruch 7 aufgeführt, wobei das erste ergänzende Gemisch durch Behandeln des Alkalimetallsalzes und des ultrareinen Wassers in einem Ultraschallbad hergestellt wird.

11. Das Verfahren, wie in Anspruch 7 aufgeführt, wobei das zweite ergänzende Gemisch weiterhin ein zweites Lösungsmittel umfasst, wobei optional das zweite ergänzende Gemisch durch Behandeln des Titanalkoxids und des zweiten Lösungsmittels in einem Ultraschallbad hergestellt wird.

12. Das Verfahren, wie in Anspruch 7 aufgeführt, wobei das dritte ergänzende Gemisch weiterhin ein drittes Lösungsmittel und ein Co-Lösungsmittel umfasst, wobei optional das dritte ergänzende Gemisch durch Behandeln des dritten Lösungsmittels, des Co-Lösungsmittels, und des Zinnkatalysators oder des Titankatalysators in einem Ultraschallbad hergestellt wird.

13. Das Verfahren, wie in Anspruch 7 aufgeführt, wobei das Herstellen des Zwischengemisches ein Behandeln des Vorgemisches und des ersten ergänzenden Gemisches in einem Ultraschallbad umfasst.

14. Das Verfahren, wie in Anspruch 7 aufgeführt, wobei das Herstellen der kolloidalen Suspension ein Behandeln des Zwischengemisches und des zweiten ergänzenden Gemisches in einem Ultraschallbad umfasst.

15. Das Verfahren, wie in Anspruch 7 aufgeführt, wobei das Herstellen der Korrosionsschutzzusammensetzung ein Behandeln der kolloidalen Suspension und des dritten ergänzenden Gemisches in einem Ultraschallbad umfasst.

## Revendications

1. Composition de revêtement de protection contre la corrosion à base d'un réseau de silicone comprenant :
un premier mélange comprenant :
un premier silane choisi dans le groupe constitué par le méthyltriacétoxysilane et le diméthyldiacétoxysilane ;
un deuxième silane de type méthyltriméthoxysilane ; et
un troisième silane choisi dans le groupe constitué par le tétraméthoxysilane et le tétraéthoxysilane,
dans laquelle le premier mélange comprend de 3,0 à 10,0 % du premier silane, de 2,0 à 8,0 % du deuxième silane, et de 0,5 à 3,0 % du troisième silane.

2. Composition de revêtement de protection contre la corrosion à base d'un réseau de silicone selon la revendication 1, comprenant en outre :
un deuxième mélange comprenant un sel de métal alcalin, dans lequel éventuellement le sel de métal alcalin est un bicarbonate de sodium ou un bicarbonate de potassium, de préférence le deuxième mélange comprend de 2,0 à 15,0 % de sel de métal alcalin.

3. Composition de revêtement de protection contre la corrosion à base d'un réseau de silicone selon la revendication 2, comprenant en outre :
un troisième mélange comprenant un alcoxyde de titane, dans lequel éventuellement l'alcoxyde de titane est un éthoxyde de titane (IV) ou un méthoxyde de titane (IV), de préférence le troisième mélange comprend de 0,1 à 2,0 % d'alcoxyde de titane.

4. Composition de revêtement de protection contre la corrosion à base d'un réseau de silicone selon la revendication 3, comprenant en outre :
un quatrième mélange comprenant un catalyseur d'étain ou un catalyseur de titane,
dans laquelle éventuellement le catalyseur d'étain est choisi dans le groupe constitué par le dilaurate de dibutylétain, le di-n-butyldiacétoxyétain, le diisooctylmaléate de dibutyl-étain, le di-n-butylbis(2,4-pentanedionate)étain, le di-n-butylbutoxychloroétain, le dilaurate de dioctylétain, le dinéodécanoate de diméthylétain, et le bis (néodécanoate)-étain, et le catalyseur de titane est choisi dans le groupe constitué par le 2-éthylhexoxyde de titane, le bis(-2,4-pentanedionate) de di-n-butoxyde de titane, le bis(-2,4-pentanedionate) de diisopropoxyde de titane, le bis(éthyl-acétoacétate) de diisopropoxyde de titane, le triméthyl-siloxyde de titane,
dans laquelle éventuellement le quatrième mélange comprend de 0,05 à 0,20 % de catalyseur d'étain ou de catalyseur de titane,
dans laquelle éventuellement le quatrième mélange comprend en outre un second solvant et un co-solvant, et éventuellement le second solvant est choisi dans le groupe constitué par l'isopropanol, le méthanol, l'éthanol, et le butanol et le co-solvant est l'éther diéthylique.

5. Composition de revêtement de protection contre la corrosion à base d'un réseau de silicone selon la revendication 4, dans laquelle le premier mélange comprend en outre un premier solvant, dans laquelle éventuellement le premier solvant est choisi dans le groupe constitué par l'isopropanol, le méthanol, l'éthanol, et le butanol.

6. Composition de revêtement de protection contre la corrosion à base d'un réseau de silicone selon la revendication 4, dans laquelle chacun du premier silane, du deuxième silane, et du troisième silane a une pureté d'environ 90 à environ 99 %.

7. Procédé de fabrication d'un revêtement de composition de protection contre la corrosion comprenant :
la préparation d'un mélange préliminaire comprenant :
de 3,0 à 10 % d'un premier silane choisi dans le groupe constitué par le méthyltriacétoxysilane et le diméthyl-diacétoxysilane ;
de 2,0 à 8,0 % d'un deuxième silane de type méthyltriméthoxysilane ; et
de 0,5 à 3,0 % d'un troisième silane choisi dans le groupe constitué par le tétraméthoxysilane et le tétraéthoxy-silane ;
la préparation d'un mélange intermédiaire comprenant le mélange préliminaire et un premier mélange supplémentaire, le premier mélange supplémentaire comprenant un sel de métal alcalin et de l'eau ultrapure ;
la préparation d'une suspension colloïdale comprenant le mélange intermédiaire et un deuxième mélange supplémentaire, le deuxième mélange supplémentaire comprenant un alcoxyde de titane ;
la préparation d'une composition de protection contre la corrosion comprenant la suspension colloïdale et un troisième mélange supplémentaire, le troisième mélange supplémentaire comprenant un catalyseur d'étain ou un catalyseur de titane.

8. Procédé selon la revendication 7, dans lequel le mélange préliminaire comprend en outre un premier solvant.

9. Procédé selon la revendication 7, dans lequel la préparation du mélange préliminaire comprend la sonication du premier silane, du deuxième silane et du troisième silane.

10. Procédé selon la revendication 7, dans lequel le premier mélange supplémentaire est préparé par sonication du sel de métal alcalin et de l'eau ultrapure.

11. Procédé selon la revendication 7, dans lequel le deuxième mélange supplémentaire comprend en outre un deuxième solvant, le deuxième mélange supplémentaire étant éventuellement préparé par sonication de l'alcoxyde de titane et du deuxième solvant.

12. Procédé selon la revendication 7, dans lequel le troisième mélange supplémentaire comprend en outre un troisième solvant et un co-solvant, le troisième mélange supplémentaire étant éventuellement préparé par sonication du troisième solvant, du co-solvant, et du catalyseur d'étain ou du catalyseur de titane.

13. Procédé selon la revendication 7, dans lequel la préparation du mélange intermédiaire comprend la sonication du mélange préliminaire et du premier mélange supplémentaire.

14. Procédé selon la revendication 7, dans lequel la préparation de la suspension colloïdale comprend la sonication du mélange intermédiaire et du deuxième mélange supplémentaire.

15. Procédé selon la revendication 7, dans lequel la préparation de la composition de protection contre la corrosion comprend la sonication de la suspension colloïdale et du troisième mélange supplémentaire.
